# EUROPEAN PATENT APPLICATION

(11) **EP 2 442 536 A1**
(43) Date of publication of application: **18.04.2012**
(21) Application number: 10187672.0
(22) Date of filing: 15.10.2010
(51) Int. Cl.: H04M 1/02

(54) **Mobile device with rotatable portion for input mechanism**

(71) Applicant: RESEARCH IN MOTION LIMITED, Waterloo, Ontario N2L 3W8 (CA)
(72) Inventor: Griffin, Jason Tyler, Waterloo Ontario N2L 3W8 (CA)
(74) Representative: Moore, Barry

(57) **Abstract**

Disclosed herein is a mobile device comprising a base providing a display and a rotatable portion providing an input mechanism. The rotatable portion is rotatable about a coupling between at least a first position in which the rotatable portion covers a part of the display and a second position in which the rotatable portion exposes more of the display while leaving the input mechanism accessible to a user. In at least one variant embodiment, the rotatable portion may be rotatable to a third position "behind" the base with the input mechanism remaining accessible to the user.

## Description

Embodiments described herein relate generally to devices, such as devices that may be placed and used in the human hand, that provide an input mechanism and a display.

A user may provide instructions to the mobile device via an input mechanism such as a keyboard or keypad, trackball, touch pad, scroll wheel, touch screen or one or more other input devices. Output may be provided by the mobile device via a display screen of the mobile device, which may or may not be a touch screen.

### GENERAL

In one broad aspect, there may be provided a mobile device comprising: a base, comprising a substantially four-sided base front surface upon which a display is provided; and a cover coupled to the base at an area adjacent to one of four corners of the base front surface via a coupling, wherein the cover comprises a cover front surface upon which an input mechanism is provided; wherein the coupling is configured such that the cover is rotatable relative to the base about a first axis of rotation, between at least a first position and a second position; wherein the first axis of rotation is a normal to both the base front surface and the cover front surface; wherein in the first position, the display is covered in part by the cover, leaving a first area of the display exposed; wherein in the second position, a second area of the display greater than the first area is left exposed by the cover; and wherein when the cover is in the first position, the cover front surface and the base front surface are substantially parallel and face in the same direction.

In another broad aspect, both the input mechanism and at least a part of the display may remain exposed when the cover is in the first position and also when the cover is in the second position, and the input mechanism remains operable to receive user input when the cover is in the first position and also when the cover is in the second position.

In another broad aspect, the mobile device may comprise a position sensor configured to detect when the cover is in the first position and when the cover is in the second position.

In another broad aspect, the display may be configured to output data in a portrait mode when the position sensor detects that the cover is in the first position, and to output data in a landscape mode when the sensor detects that the cover is in the second position.

In another broad aspect, the cover front surface may be substantially four-sided. For example, the cover front surface may be substantially square-shaped.

In another broad aspect, the cover may rotate about 90 degrees about the first axis of rotation when rotating from the first position to the second position.

In another broad aspect, the base front surface may be bound by opposing first and second short sides of the base front surface and opposing first and second long sides of the base front surface, the first short side of the base front surface and the first long side of the base front surface converging at the one of the four corners of the base front surface; the cover front surface is bound by at least first and second sides, and the first and second sides converge at a corner of the cover front surface that is adjacent to the coupling; when the cover is in the first position, the first side of the cover front surface is substantially overlapped and aligned with the first long side of the base front surface, and the second side of the cover front surface is substantially overlapped and aligned with the first short side of the base front surface; and when the cover is in the second position, the first side of the cover front surface is substantially overlapped and aligned with the first short side of the base front surface.

In another broad aspect, the first side of the cover front surface and the first short side of the base front surface may be substantially equal in length.

In another broad aspect, the base front surface may be bound by opposing first and second short sides of the base front surface and opposing first and second long sides of the base front surface, the first short side of the base front surface and the first long side of the base front surface converging at the one of the four corners of the base front surface; the cover front surface is bound by at least first and second sides, and the first and second sides converge at a corner of the cover front surface that is adjacent to the coupling; when the cover is in the first position, the first side of the cover front surface is substantially overlapped and aligned with the first long side of the base front surface, and the second side of the cover front surface is substantially overlapped and aligned with the first short side of the base front surface; and when the cover is in the second position, the second side of the cover front surface is substantially overlapped and aligned with the first long side of the base front surface.

In another broad aspect, the first side of the cover front surface and the first short side of the base front surface may be substantially equal in length.

In another broad aspect, the coupling may be configured such that the cover is rotatable relative to the base about a second axis of rotation, between the second position and a third position, wherein the second axis of rotation is perpendicular to the first axis of rotation.

In another broad aspect, in the third position, the cover may be folded behind the base.

In another broad aspect, in the third position, the cover may be folded behind the base such that the cover front surface and the base front surface are parallel and face in opposite directions.

In another broad aspect, the input mechanism may remain operable to receive user input when the cover is in the third position.

In another broad aspect, a position sensor may be configured to detect when the cover is in the third position, and the display is configured to operate in a mode associated with the third position.

In another broad aspect, the cover may rotate approximately 180 degrees about the second axis of rotation when rotating from the second position to the third position.

In another broad aspect, the base front surface may be bound by opposing first and second short sides of the base front surface and opposing first and second long sides of the base front surface, the first short side of the base front surface and the first long side of the base front surface converging at the one of the four corners of the base front surface; the cover front surface is bound by at least first and second sides that converge at a corner of the cover front surface that is adjacent to the coupling; when the cover is in the first position, the first side of the cover front surface is substantially overlapped and aligned with the first long side of the base front surface, and the second side of the cover front surface is substantially overlapped and aligned with the first short side of the base front surface; when the cover is in the second position, the first side of the cover front surface is substantially overlapped and aligned with the first short side of the base front surface; and when the cover is in the third position, the cover is folded behind the base such that the first long side of the base front surface is substantially overlapped and aligned with the second side of the cover front surface, and the first short side of the base front surface is substantially overlapped and aligned with the first side of the cover front surface.

In another broad aspect, the first side of the cover front surface and the first short side of the base front surface may be substantially equal in length.

In another broad aspect, the base front surface may be bound by opposing first and second short sides of the base front surface and opposing first and second long sides of the base front surface, the first short side of the base front surface and the first long side of the base front surface converging at the one of the four corners of the base front surface; the cover front surface is bound by at least first and second sides that converge at a corner of the cover front surface that is adjacent to the coupling; when the cover is in the first position, the first side of the cover front surface is substantially overlapped and aligned with the first long side of the base front surface, and the second side of the cover front surface is substantially overlapped and aligned with the first short side of the base front surface; when the cover is in the second position, the second side of the cover front surface is substantially overlapped and aligned with the first long side of the base front surface; and when the cover is in the third position, the cover is folded behind the base such that the first long side of the base front surface is substantially overlapped and aligned with the second side of the cover front surface, and the first short side of the base front surface is substantially overlapped and aligned with the first side of the cover front surface.

In another broad aspect, the input mechanism may comprise one or more input elements selected from a group comprising: a track pad; a track ball; a touch screen; a keypad; a keyboard; one or more media playback controls; and one or more buttons.

### Brief Description of the Drawings

For a better understanding of embodiments of the systems and methods described herein, and to show more clearly how they may be carried into effect, reference will be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 illustrates a front perspective view of a mobile device with a rotatable portion in a first position, in at least one example embodiment;
FIG. 5 illustrates a right side view of the mobile device of FIG. 4;
FIG. 6 illustrates a front perspective view of a mobile device with a rotatable portion in a second position, in at least one example embodiment;
FIG. 7 illustrates a right side view of the mobile device of FIG. 6;
FIG. 8 illustrates a right side view of the mobile device of FIG. 6, the rotatable portion being rotated from the second position to a third position, in at least one example embodiment;
FIG. 9 illustrates a right side view of a mobile device with a rotatable portion in a third position, in at least one example embodiment;
FIG. 10 illustrates a front view of the mobile device of FIG. 9;
FIG. 11 illustrates a back view of the mobile device of FIG. 9; and
FIG. 12 illustrates a front perspective view of a mobile device with a rotatable portion in an alternative second position, in a variant embodiment.

### Detailed Description

These and other aspects and embodiments will be described in further detail below.

Some embodiments of the systems and methods described herein make reference to a mobile device. A mobile device may be a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. In some embodiments the mobile device may comprise a portable electronic device having no wireless communication capability, such as digital camera. A mobile device may communicate with other devices through a network of transceiver stations.

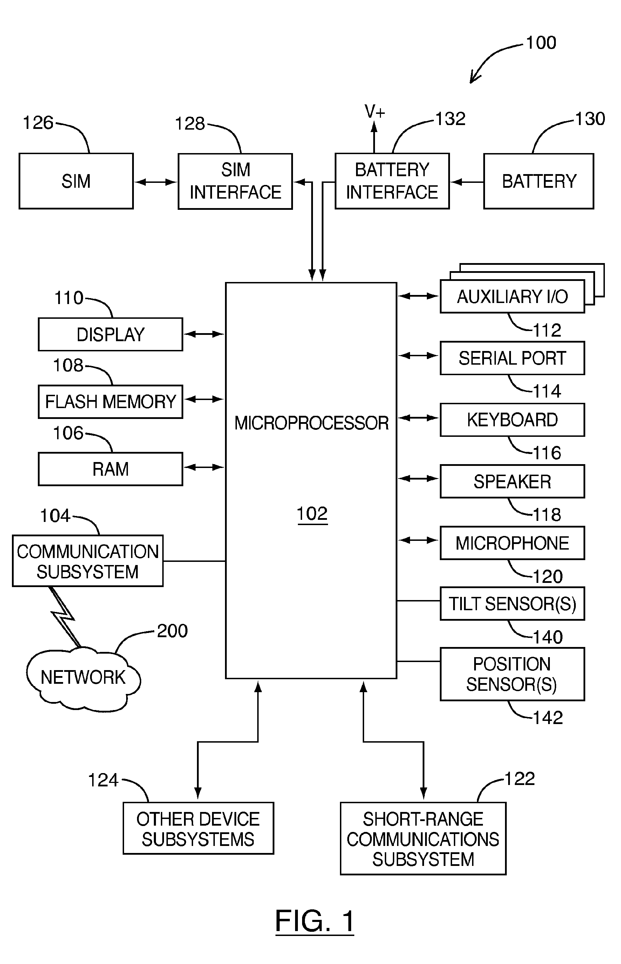

To aid the reader in understanding the structure of a typical mobile device and how it communicates with other devices, reference is made to FIGS. 1 through 3. The concepts recited in the claims are not necessarily limited to the typical mobile device described below, however.

Referring first to FIG. 1, a block diagram of a mobile device in one example implementation is shown generally as 100. Mobile device 100 comprises a number of components, the controlling component being microprocessor 102 (which may be, but need not be, the principal processor in mobile device 100). Microprocessor 102 controls the overall operation of mobile device 100. Communication functions, including data and voice communications, may be performed through communication subsystem 104. Communication subsystem 104 may be configured to receive messages from and send messages to a wireless network 200. In one example implementation of mobile device 100, communication subsystem 104 may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behavior described herein, and it will also be understood by persons skilled in the art that the embodiments of the present disclosure are intended to use any other suitable standards that are developed in the future. The wireless link connecting communication subsystem 104 with network 200 may represent one or more different Radio Frequency (RF) channels, operating according to defined protocols specified for GSM/GPRS communications. With newer network protocols, these channels may be capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN™), Evolution-Data Optimized (EV-DO), and High Speed Packet Access (HSPA), etc.

Microprocessor 102 may also interact with additional subsystems such as a Random Access Memory (RAM) 106, flash memory 108, display 110, auxiliary input/output (I/O) subsystem 112, serial port 114, keyboard 116, speaker 118, microphone 120, camera unit 148, short-range communications subsystem 122, and other device subsystems 124.

As will be discussed in more detail below, microprocessor 102 may interact with display 110, keyboard 116, and any other input mechanism (e.g. as provided by auxiliary I/O subsystem 112) to provide output to and/or receive input from users of mobile device 100. Mobile device 100 may provide one or more input mechanisms, including but not limited to one or more of: a touch pad, a track ball, a touch screen, a keypad, a full or partial keyboard, an audio receiver, a scroll wheel, one or more media playback controls, and one or more buttons. Display 110 may be any kind of apparatus configured to display visual information, for example. Display 110 may or may not be a touch screen configured to receive user input. Display 110 may be a light-emitting diode (LED) backlit display, or a liquid crystal display (LCD), for example. Other displays known in the art may be employed in variant embodiments.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, as well as device-resident functions such as a calculator or task list. Operating system software used by microprocessor 102 is typically stored in a persistent store such as flash memory 108, which may alternatively be a read-only memory (ROM) or similar storage element (not shown). Those skilled in the art will understand that the operating system, specific device applications, or parts thereof, may be temporarily loaded into a volatile store such as RAM 106.

Mobile device 100 may send and receive communication signals over network 200 after network registration or activation procedures have been completed. Network access may be associated with a subscriber or user of a mobile device 100. To identify a subscriber, mobile device 100 may provide for a Subscriber Identity Module ("SIM") card 126 (or e.g. USIM for UMTS, or CSIM or RUIM for CDMA) to be inserted in a SIM interface 128 in order to communicate with a network. SIM 126 may be one example type of a conventional "smart card" used to identify a subscriber of mobile device 100 and to personalize the mobile device 100, among other things. Without SIM 126, mobile device 100 may not be fully operational for communication with network 200. By inserting SIM 126 into SIM interface 128, a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM 126 may include a processor and memory for storing information. Once SIM 126 is inserted in SIM interface 128, it may be coupled to microprocessor 102. In order to identify the subscriber, SIM 126 may contain some user parameters such as an International Mobile Subscriber Identity (IMSI). By using SIM 126, a subscriber may not necessarily be bound by any single physical mobile device. SIM 126 may store additional subscriber information for a mobile device as well, including date book (or calendar) information and recent call information.

Mobile device 100 may be a battery-powered device and may comprise a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide power to mobile device 100. In some embodiments, mobile device 100 may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM may have functionality to organize and manage data items of interest to a subscriber, such as, but not limited to, e-mail, calendar events, voice mails, appointments, and task items. A PIM application may have the ability to send and receive data items via wireless network 200. PIM data items may be seamlessly integrated, synchronized, and updated via wireless network 200 with the mobile device subscriber's corresponding data items stored and/or associated with a host computer system. This functionality may create a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 may enable a subscriber to set preferences through an external device or software application, and extend the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 may provide for communication between mobile device 100 and different systems or devices, without the use of network 200. For example, subsystem 122 may include an infrared device and associated circuits and components for short-range communication. Examples of short-range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download may be processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary I/O subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad, for example. A composed item may be transmitted over network 200 through communication subsystem 104.

For voice communications, the overall operation of mobile device 100 may be substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output may be accomplished primarily through speaker 118, display 110 may also be used to provide additional information such as the identity of a calling party, duration of a voice call, or other voice call related information.

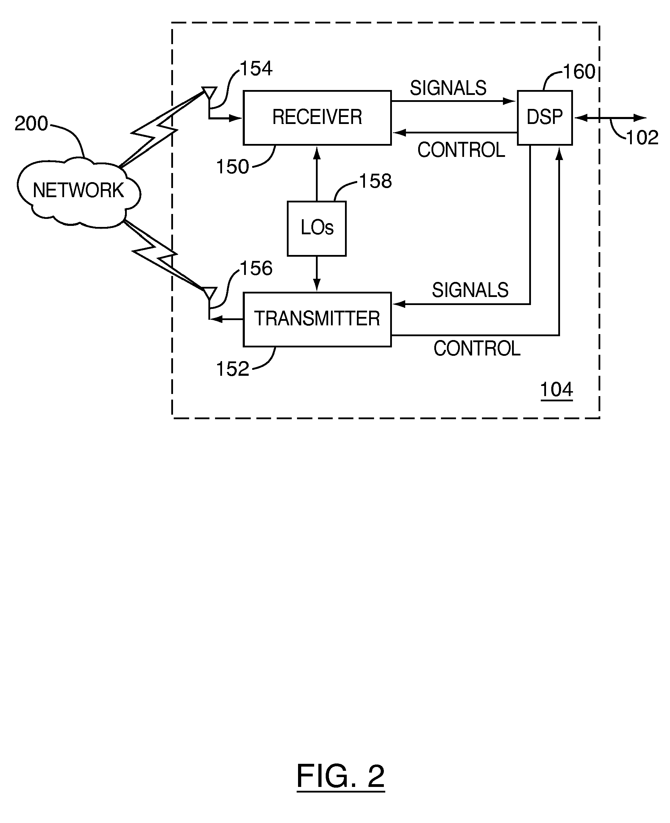

Referring now to FIG. 2, a block diagram of the communication subsystem component 104 of FIG. 1 is shown. Communication subsystem 104 may comprise a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 may be dependent upon the network 200 in which mobile device 100 is intended to operate; thus, it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is generally a limited resource, typically due to limits in overall bandwidth and limited battery power of mobile device 100.

When mobile device 100 is fully operational, transmitter 152 may be typically keyed or turned on only when it is sending to network 200 and may otherwise be turned off to conserve resources. Similarly, receiver 150 may be periodically turned off to conserve power until it is needed to receive signals or information (if at all) during designated time periods.

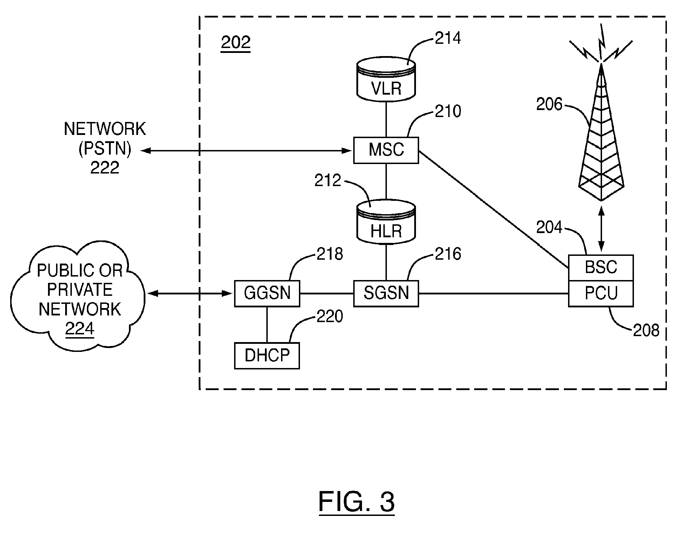

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with GPRS and GSM technologies; however, in other embodiments, different standards may be implemented as discussed in more detail above. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) server 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 may also contain a Packet Control Unit (PCU) 208 that connects to SGSN 216 to control segmentation, radio channel allocation and to satisfy packet switched requirements. To track mobile device location and availability for both circuit switched and packet switched management, HLR 212 may be shared between MSC 210 and SGSN 216. Access to VLR 214 may be controlled by MSC 210.

Station 206 may be a fixed transceiver station. Station 206 and BSC 204 together may form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile may be stored in HLR 212. HLR 212 may also contain location information for each registered mobile device and can be queried to determine the current location of a mobile device. MSC 210 may be responsible for a group of location areas, and may store the data of the mobile devices currently in its area of responsibility in VLR 214. Further, VLR 214 may also contain information on mobile devices that are visiting other networks. The information in VLR 214 may include part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times while requiring less use of computing resources.

SGSN 216 and GGSN 218 are elements that may be added for GPRS support; namely packet switched data support, within GSM. SGSN 216 and MSC 210 may have similar responsibilities within wireless network 200 by keeping track of the location of each mobile device 100. SGSN 216 also performs security functions and access control for data traffic on network 200. GGSN 218 may provide internetworking connections with external packet switched networks and connect to one or more SGSNs 216 via an Internet Protocol (IP) backbone network operated within the network 200. During normal operations, a given mobile device 100 may perform a "GPRS Attach" to acquire an IP address and to access data services. This normally is not present in circuit switched voice channels as Integrated Services Digital Network (ISDN) addresses may be generally used for routing incoming and outgoing calls. Currently, GPRS capable networks may use private, dynamically assigned IP addresses, using a DHCP server 220 connected to the GGSN 218. There are many mechanisms for dynamic IP assignment, including the use of a combination of a Remote Authentication Dial-In User Service (RADIUS) server and a DHCP server, for example. Once the GPRS Attach is complete, a logical connection may be established from a mobile device 100, through PCU 208, and SGSN 216 to an Access Point Node (APN) within GGSN 218, for example. The APN may represent a logical end of an IP tunnel that can either access direct Internet compatible services or private network connections. The APN may also represent a security mechanism for network 200, insofar as each mobile device 100 is assigned to one or more APNs, and mobile devices 100 cannot generally exchange data without first performing a GPRS Attach to an APN that it has been authorized to use. The APN may be considered to be similar to an Internet domain name such as "myconnection.wireless.com".

Once the GPRS Attach is complete, a tunnel may be created and all traffic exchanged within standard IP packets using any protocol that can be supported in IP packets. This may include tunneling methods such as IP over IP as in the case with some IPSecurity (IPsec) connections used with Virtual Private Networks (VPN). These tunnels are also referred to as Packet Data Protocol (PDP) Contexts and there may be a limited number of these available in the network 200. To maximize use of the PDP Contexts, network 200 will run an idle timer for each PDP Context to determine if there is a lack of activity. When a mobile device 100 is not using its PDP Context, the PDP Context may be deallocated and the IP address returned to the IP address pool managed by DHCP server 220.

As indicated above, the mobile device and wireless network are illustrative and the concepts described herein are not necessarily restricted to such mobile devices or networks. In some embodiments, the concepts may be implemented in a mobile device such as a camera or a handheld gaming device, which may or may not have wireless communication capability.

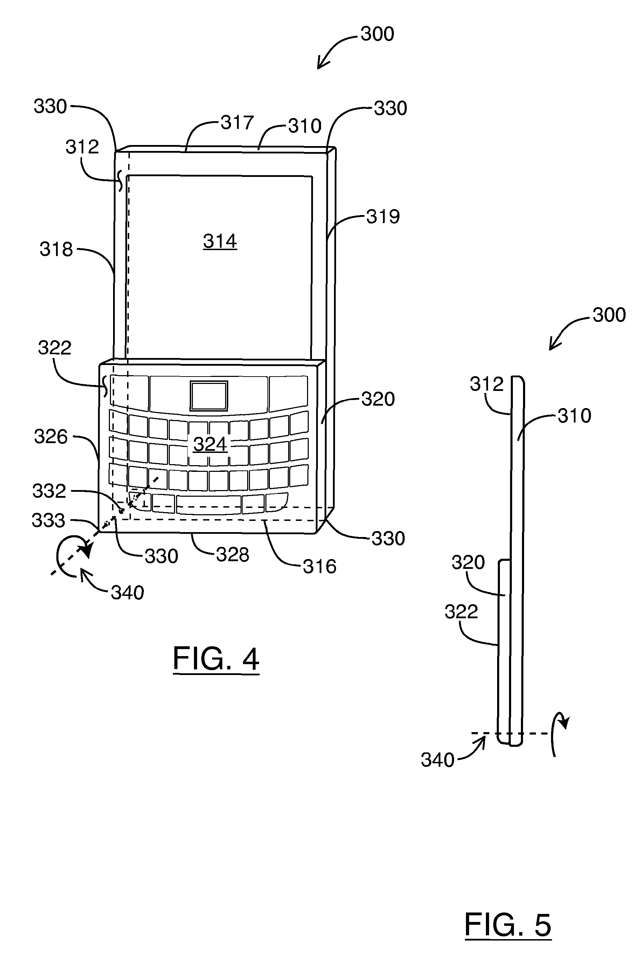

Referring to FIGS. 4 and 5, illustrations of a front perspective view and a side view, respectively, of a mobile device (e.g. mobile device 100 of FIG. 1) with a rotatable portion in a first position, in accordance with at least one embodiment are provided. With the rotatable portion in this first position, the mobile device is referred to generally as 300 in FIGS. 4 and 5.

Mobile device 300 comprises a base portion 310 ("base") and a rotatable portion, also referred to herein as a cover portion 320 ("cover").

Base 310 comprises a base front surface 312, upon which a display screen 314 ("display") is provided. Display 314 may be an LCD screen, for example. Display 314 may or may not be a touch screen. In one embodiment, display 314 is not configured to receive user input when an input mechanism 324 for receiving user input is provided on cover portion 320.

In at least one embodiment, base front surface 312 is substantially four-sided. Typically, base front surface 312 will be substantially rectangular to provide mobile device 300 with a substantially rectangular profile, although base front surface 312 may be square in some variant implementations. Users may prefer a mobile device with a rectangular profile, as it may conform better with a user's hand, for example, particularly if the body of the mobile device is relatively thin.

In at least one embodiment, display 314 provided on base front surface 312 will also be substantially rectangular. In certain uses, a rectangular display 314 may allow users to view output in a "portrait" mode (with the longer edges running vertically when display 314 is viewed from the front as shown in FIG. 4), or in a "landscape" mode (with the longer edges running horizontally when display 314 is viewed from the front as shown in FIG. 4), as desired by the user, depending on the format of the content being viewed.

In the example shown, base front surface 312 is bound by a first short side 316 and an opposing second short side 317, as well as a first long side 318 and an opposing second long side 319. One or more of sides 316, 317, 318, 319 of base front surface 312 need not be straight, and may be slightly curved (e.g. to accommodate a user's hand), for example, in some embodiments. One or more of sides 316, 317, 318, 319 may be notched in some embodiments, to accommodate a mobile device holder or some other attachable accessory (not shown), for example.

As illustrated in FIG. 4, each short side 316, 317, at one end, converges with one of the long sides 318, 319 at a corner 330 of base front surface 312, and at the other end, converges with the other of the long sides 318, 319 at another corner 330 of base front surface 312. Corners 330 of base front surface 312 need not be square. For example, each corner 330 of base front surface 312 may be curved, beveled, filleted, or rounded, for example. The shape of different corners may be different. Typically, each corner 330 may only be slightly rounded or beveled so as to permit mobile device 300 to maintain its rectangular profile.

Adjacent to one corner 330 is a coupling 332. Cover 320 is a rotatable portion, wherein cover 320 is rotatably coupled to base 310 at coupling 332. In one embodiment, coupling 332 may comprise a hinge, for example. Coupling 332 is configured such that cover 320 is rotatable relative to base 310 to a second position, as will be described in further detail below.

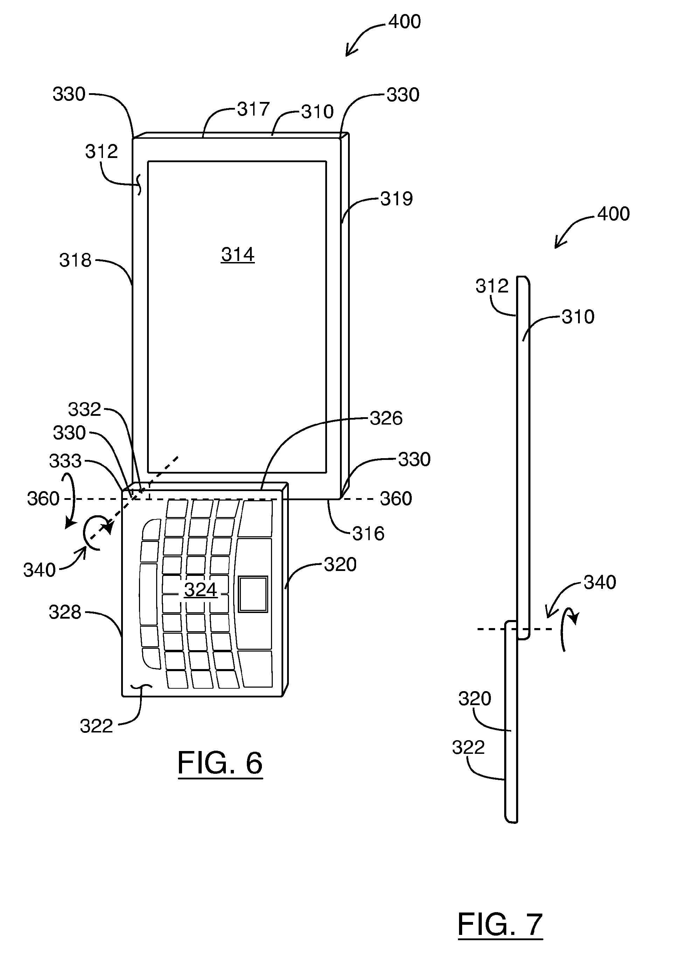

In the example of FIG. 4, on base 310, coupling 332 is provided in an area adjacent to corner 330 at which first short side 316 and first long side 318 converge. This location of coupling 332 may be provided on mobile devices intended primarily for right-handed users, as may be apparent from the position of cover 320 when mobile device 300 is in a second position (see e.g. FIG. 6) and mobile device 300 is rotated 90 degrees counterclockwise during use such that the output on display 314 is viewable in landscape mode. Cover 320, upon which an input mechanism is provided, will be positioned to the right of display 314. In a variant embodiment, the coupling may be placed adjacent to the corner at which first short side 316 and second long side 319 converge. This location of the coupling may be provided on mobile devices intended primarily for left-handed users, as may be apparent when mobile device 300 is rotated 90 degrees clockwise during use such that the output on display 314 is viewable in landscape mode. Cover 320, upon which an input mechanism is provided, will be positioned to the left of display 314 in this variant embodiment.

Cover 320 provides a cover front surface 322 upon which an input mechanism 324 is provided. Input mechanism 324 may comprise one, or more than one input elements or devices. By way of illustration, an input mechanism 324 comprising a keyboard (e.g. keyboard 116 of FIG. 1) is illustrated in FIG. 4. However, cover 320 may provide additional and/or alternative input devices, in variant embodiments. For example, selection devices (e.g. a trackball, a touchpad, a trackpad, and/or other navigation devices) may be provided, in addition to or in lieu of a keyboard or keypad. As a further example, other controls such as media playback controls may be provided.

Cover front surface 322 comprises at least one cover first side 326 and at least one cover second side 328. In at least one embodiment, cover front surface 322 will also be substantially four-sided (e.g. rectangular or square), and will be further bound by an additional cover side (not shown) opposite cover first side 326, and an additional cover side (not shown) opposite cover second side 328. However, in variant embodiments, cover front surface 322 need not be substantially four-sided, and could be of some other shape (e.g. triangular or pie-shaped) having a corner proximate to coupling 332.

As previously noted, coupling 332 is configured such that cover 320 is rotatable relative to base 310 from a first position (e.g. as shown in FIGS. 4 and 5) to a second position (e.g. as shown in FIGS. 6 and 7). Coupling 332 is provided in an area adjacent to a corner 333 of cover 320, at which cover first side 326 and cover second side 328 of cover front surface 322 converge.

In at least one embodiment, cover first side 326 and cover second side 328 will be generally perpendicular, converging at corner 333. However, the corners of cover front surface 322 need not be square. For example, each corner of cover front surface 322 may be curved, beveled, filleted, or rounded, for example. The shape of different corners may be different. In one embodiment, each corner of cover front surface 322 may only be slightly rounded or beveled, such that cover 320 maintains a rectangular or square profile.

In the example embodiment shown in FIG. 4, when cover 320 is in the first position, cover second side 328 of cover front surface 322 is substantially overlapped and aligned with the first short side 316 of the base front surface 312, and cover first side 326 of cover front surface 322 is substantially overlapped and aligned with first long side 318 of base front surface 312. It will be understood by persons skilled in the art that sides of cover 320 need not overlap sides of base 310 perfectly in the first position, or in any of the other positions as described herein.

Cover 320 can vary in size relative to base 310, depending upon the particular implementation. For example, in FIG. 4, the length of cover second side 328 is shown substantially equal to the length of first short side 316 of base front surface 312, such that the left and right sides of cover 320 (when mobile device 300 is viewed from the perspective shown in FIG. 4) are generally flush with the left and right sides of base 310. This may be desirable for aesthetic purposes.

However, the length of cover first side 326 need not be equal to the length of cover second side 328. In the illustrations shown in the Figures (see e.g. FIGS. 4 and 6), cover 320 has a rectangular profile, and cover first side 326 is shorter than cover second side 328, although cover first side 326 may be longer than cover second side 328 in variant embodiments. This may permit cover 320 to provide a larger area for input mechanisms, for example.

Alternatively, cover 320 may have a square profile in variant embodiments, wherein the length of cover first side 326 and the length of cover second side 328 are substantially equal. In these variant embodiments, when cover 320 is rotated into the second position (see e.g. FIG. 6), the width of cover 320 may appear to be equal to the width of base 310 (not shown in FIG. 6). This may be desirable for aesthetic purposes.

When cover 320 of mobile device 300 is in the first position (see FIGS. 4 and 5), display 314 of base 310 will be covered in part, but not completely, by cover 320, which overlaps base 310. As shown in FIG. 4, cover front surface 322 of cover 320 and base front surface 312 of base 310 define planes that are substantially parallel, and face in the same direction. Accordingly, cover 320 leaves a first area of display 314 exposed. In the first position, the user can interact with input mechanism 324 on cover 320 while simultaneously viewing output on display 314. For example, the user can interact with input mechanism 324, using both hands while base 310 and cover 320 are in the first position.

Cover 320 is configured to rotate relative to base 310 at the coupling 332 about a first axis of rotation shown as 340. In at least one embodiment, first axis of rotation 340 is substantially normal (i.e. perpendicular or substantially 90 degrees) to both base front surface 312 and cover front surface 322.

For example, cover 320 as shown in FIG. 4 can be rotated in a clockwise direction to reveal more of display 314. In some embodiments, coupling 332 may be configured to prevent cover 320 from rotating in a counter-clockwise direction. Other elements may be provided on base 310 and/or cover 320 to prevent cover 320 from rotating in the counter-clockwise direction.

With cover 320 rotatable from the first position to a different position in which a greater area of display 314 is exposed, usability of the mobile device may be enhanced. If only a small area of display 314 is desired to output particular information (e.g. the time from a digital clock), cover 320 may be operated in the first position, and mobile device 300 will be relatively compact. On the other hand, if a larger area of display 314 is desired to output particular information (e.g. when viewing a web page), cover 320 may be rotated and operated in a second position, with the exposed area of display 314 being increased to accommodate more information.

Referring now to FIGS. 6 and 7, illustrations of a front view and a side view, respectively, of a mobile device (e.g. mobile device 100 of FIG. 1) with a rotatable portion in a second position, in accordance with at least one embodiment are provided. With the rotatable portion (e.g. cover 320) in this second position, the mobile device is referred to generally as 400 in FIGS. 6 and 7.

In one embodiment, cover 320 of mobile device 300 (FIGS. 4 and 5) has been rotated clockwise (e.g. 90 degrees) from the first position relative to base 310 about first axis of rotation 340, to a second position as shown in FIGS. 6 and 7. In this example, cover first side 326 of cover front surface 322 is now substantially overlapped and aligned with first short side 316 of base front surface 312 after the rotation of cover 320, and cover second side 328 is aligned with first long side 318 of base front surface 312. In the example embodiment illustrated in FIG. 6, cover front surface 322 of cover 320 and base front surface 312 of base 310 still define planes that are substantially parallel and face in the same direction after the rotation of cover 320.

In some embodiments, coupling 332 may be configured to prevent cover 320 from rotating further once the second position is attained. Other elements may be provided on base 310 and/or cover 320 to prevent cover 320 from rotating further once the second position is attained.

Whether cover 320 is in the first position or the second position, mobile device 300, 400 may be oriented for use in different orientations, depending on the tasks being performed by a user. In at least one embodiment, mobile device 300 may be equipped with one or more tilt sensors 140 (FIG. 1) or other sensor elements, configured to detect the orientation of mobile device 300, 400 with respect to, for example, the angle of slope, elevation, or inclination of mobile device 300, 400. In one embodiment, tilt sensor 140 may comprise an accelerometer. For example, one or more tilt sensors may be configured to detect whether a user is operating the device with the second short side 317 of base front surface 312 at the "top" of the device, or whether the user is operating the device with the second long side 319 of base front surface 312 at the "top" of the device, when viewing the device from the perspective of FIG. 6.

In one embodiment, a processor (e.g. microprocessor 102 of FIG. 1) is configured to automatically output data on display 314 in a particular mode depending on the orientation of the device detected by the one or more tilt sensors. For example, if the one or more tilt sensors detect that the user is operating the device with the second short side 317 of base front surface 312 at the "top" of the device, display 314 may output data in a "portrait" mode, whereas if the one or more tilt sensors detect that the user is operating the device with the second long side 319 of base front surface 312 at the "top" of the device, display 314 may output data in a "landscape" mode.

As a further example, when cover 320 is in the first position (see e.g. FIG. 4), the user may be more likely to operate the mobile device in a "portrait" mode, and the data may be output on display 314 accordingly. When cover 320 is in the second position with the cover 320 being rotated to expose more of the display 314 (see e.g. FIG. 6), the user may wish to use the device so that the second long side 319 of base front surface 312 is at the "top" of the device. Data may then be output on display 314 in "landscape" mode accordingly.

The above examples are provided as illustrations only, and it will be understood that different display modes may be implemented for different orientations of the mobile device, depending on for example, one or more of: the dimensions of base 310 and/or cover 320, the relative dimensions of base 310 and/or cover 320, the orientation of elements of input mechanism 324, the relative positions of base 310 and/or cover 320 in a given position, and other factors.

In a variant embodiment, the mobile device may be configured to allow a user to manually select the orientation mode (e.g. portrait, landscape), via input mechanism 324.

The rotation of cover 320 with respect to base 310 from the first position to the second position allows for a change in location of input mechanism 324 relative to base 310. Having input mechanism 324 located over base 310, when cover 320 is in the first position, allows for compact use and storage. Where cover 320 is in the second position, the user sees more of display 314, and may, for example, use one hand when operating input mechanism 324.

For example, in FIGS. 4 and 6, corner 330 adjacent to coupling 332 is shown by way of example as being at the intersection of first short side 316 and first long side 318 of base front surface 312. When cover 320 is in the second position, mobile device 400 may be oriented so that input mechanism 324 is positioned to the right of display 314, allowing for use of input mechanism 324 with a user's right hand. In variant embodiments where the corner 330 adjacent to coupling 332 is at the intersection of first short side 316 and second long side 319 of base front surface 312, when cover 320 is in the second position, mobile device 400 may be oriented so that input mechanism 324 is positioned to the left of display 314, allowing for use of input mechanism 324 with a user's left hand.

In at least one embodiment, input mechanism 324 provided on cover front surface 322 of cover 320 remains operable whether cover 320 is in the first position (e.g. FIGS. 4 and 5) or in the second position (e.g. FIGS 6 and 7). However, in a variant embodiment, input mechanism 324 may be configured to be operable when cover 320 is in one of the first and second positions, but inoperable or locked when cover 320 is in the other of the first and second positions.

In at least one embodiment, the mobile device (e.g. 300, 400) comprises at least one position sensor 142 (FIG. 1), which is configured to detect a current position of cover 320 relative to base 310. In particular, the position sensor may be configured to detect whether cover 320 is in the first position (e.g. mobile device 300 of FIGS. 4 and 5) or the second position (e.g. mobile device 400 of FIGS. 6 and 7). The position sensor may also be configured to detect whether cover 320 is in a position other than the first position or the second position.

In one embodiment, when the position sensor detects that cover 320 is in the first position, display 314 is configured to automatically output data in a "portrait" mode. In a further embodiment, when the position sensor detects that cover 320 is in the second position, display 314 is configured to output data in a "landscape" mode. In some embodiments, the user may be permitted to subsequently change the display mode (e.g. by rotating the mobile device, by shaking the mobile device, by selecting a menu option, etc.).

In at least one embodiment, input mechanism 324 may comprise "virtual" elements (e.g. virtual keys on a display), which may change orientation depending on the position of cover 320 with respect to base 310. For example, when the position sensor detects that cover 320 is in the first position, input mechanism 324 may be configured to automatically display the keyboard in a predefined orientation (e.g. "portrait"). On the other hand, when the position sensor detects that cover 320 is in the second position, input mechanism 324 may be configured to automatically display the keyboard in a different orientation (e.g. "landscape").

As a further example, the keyboard (or other virtual input elements) may be displayed in an orientation that depends not on whether the cover 320 is in a particular position, but on the detected orientation of the mobile device during use. For instance, if one or more tilt sensors detect that the user is operating the device with the second short side 317 of base front surface 312 at the "top" of the device, the keyboard may be displayed in a "portrait" orientation, whereas if the one or more tilt sensors detect that the user is operating the device with the second long side 319 of base front surface 312 at the "top" of the device, the keyboard may be displayed in a "landscape" orientation.

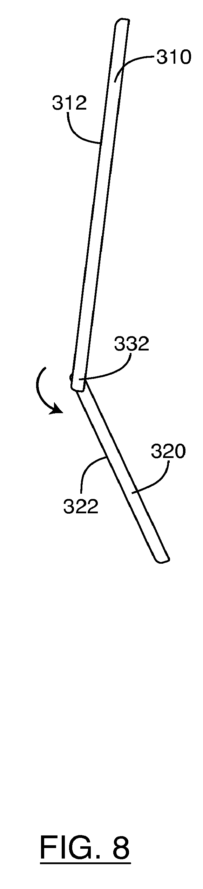

Referring now to FIG. 8, a right side view of the mobile device of FIGS. 6 and 7 is illustrated, the rotatable portion being rotated from the second position to a third position, in accordance with at least one embodiment.

In this example, cover 320 as shown in FIG. 6 has been rotated about a second axis of rotation 360 relative to the base 310 via the coupling 332, so that cover 320 appears to "fold behind" base 310 when viewing the mobile device from the perspective as shown in FIGS. 4 and 6. In one embodiment, coupling 332 comprises a double-pivot hinge, configured so that cover 320 is free to rotate about both first axis of rotation 340 and second axis of rotation 360. In one embodiment, second axis of rotation 360 is perpendicular to the first axis of rotation 340.

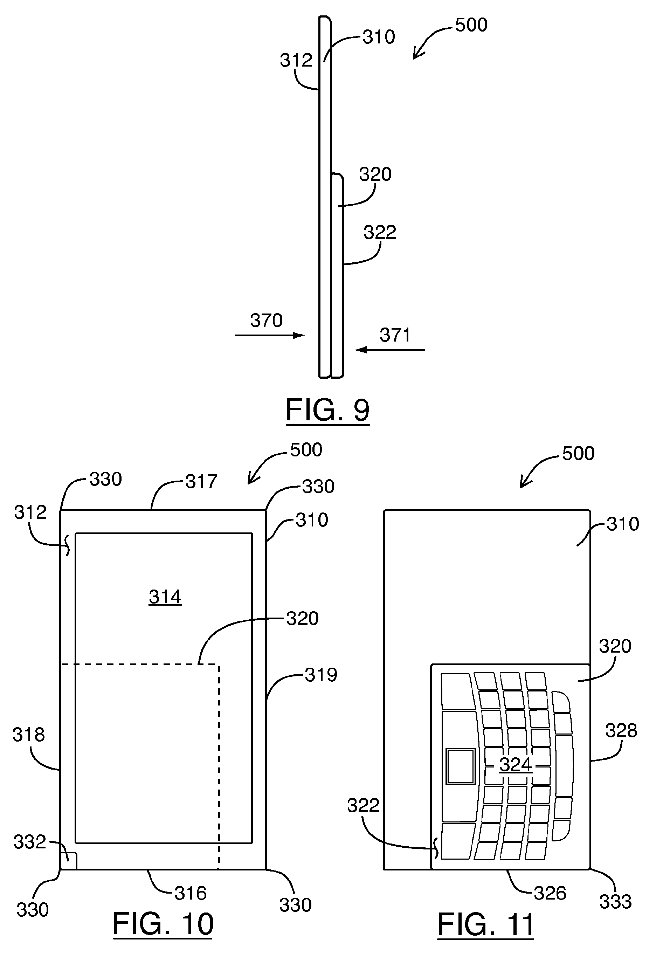

Referring now to FIGS. 9 to 11, illustrations of a side view, front view (indicated by direction 370 in FIG. 9), and back view (indicated by direction 371 in FIG. 9), respectively, of a mobile device (e.g. mobile device 100 of FIG. 1) with a rotatable portion in a third position, in accordance with at least one embodiment are provided. With the rotatable portion in this third position, the mobile device is referred to generally as 500 in FIGS. 9 to 11.

In one embodiment, cover 320 of mobile device 400 (FIGS. 6 and 7) has been rotated 180 degrees from its position relative to base 310 about second axis of rotation 360, to the third position. In the example shown in FIGS. 9 to 11, when cover 320 is in the third position, the plane defined by base front surface 312 of base 310 is substantially parallel and facing opposite from the plane defined by cover front surface 322 of cover 320. Input mechanism 324 on cover front surface 322 remains accessible, from "behind" the mobile device, when a user is viewing output on display 314.

In this embodiment, mobile device 500 will be relatively compact, similar to mobile device 300 when cover 320 is in the first position (see e.g. FIGS. 4 and 5); however, when cover 320 is in the third position, display 314 is fully exposed. This may enhance usability. For example, a user may wish to have display 314 fully exposed when watching a video, or when playing a game. In particular, the user may prefer to have display 314 fully exposed when viewing a video or when playing a game in "landscape" mode.

As shown in FIG. 10, when cover 320 is in the third position, cover 320 is folded behind base 310 such that first long side 318 of base front surface 312 is substantially overlapped and aligned with cover second side 328 of cover front surface 322 after rotation of cover 320, and first short side 316 of base front surface 312 is substantially overlapped and aligned with cover first side 326 of cover front surface 322. From the view of FIG. 11, cover first side 326 of cover front surface 322 is substantially overlapped and aligned with first short side 316 of base front surface 312 after rotation of cover 320, and cover second side 328 of cover front surface 322 is substantially overlapped and aligned with first long side 318 of base front surface 312.

In one embodiment, the position sensor that is configured to detect a current position of cover 320 relative to base 310 is further configured to detect whether the cover 320 is in the third position. The position sensor may also be configured to detect whether cover 320 is in a position other than the first, second or third positions.

In one embodiment, the mobile device may be equipped with one or more tilt sensors or other sensor elements as previously noted, configured to detect the orientation of the mobile device during use. Data on display 314 and/or virtual input elements of input mechanism 324 may also be displayed in a mode based on the detected orientation, when cover 320 is in the third position. For example, if one or more tilt sensors detect that the user is operating the device with the second short side 317 of base front surface 312 at the "top" of the device, data on display 314 and/or virtual input elements of input mechanism 324 may be displayed in a "portrait" orientation, whereas if the one or more tilt sensors detect that the user is operating the device with the second long side 319 of base front surface 312 at the "top" of the device, data on display 314 and/or virtual input elements of input mechanism 324 may be displayed in a "landscape" orientation.

In certain embodiments, input mechanism 324 remains operable to receive user input when cover 320 is in the third position. However, in variant embodiments, one or more input elements of input mechanism 324 can be automatically rendered inoperable or disabled when cover 320 is in the third position. For example, when cover 320 is in the third position, input mechanism 324 may provide an operable track pad but an inoperable keyboard. A user may be permitted to configure whether one or more input elements of input mechanism 324 are to be automatically rendered inoperable or disabled when cover 320 is in the third position.

In some embodiments, cover 320 is rotatable relative to base 310 only between the first position (e.g. mobile device 300 of FIGS. 4 and 5) and the second position (e.g. mobile device 400 of FIGS. 6 and 7). In some embodiments, cover 320 is rotatable relative to base 310 from the first position (e.g. mobile device 300 of FIGS. 4 and 5) to the second position (e.g. mobile device 400 in FIGS. 6 and 7), and subsequently to the third position (e.g. mobile device 600 in FIGS. 9 and 11). In some embodiments, coupling 332 may be configured to permit cover 320 to rotate from the third position back to the first position directly, while in other embodiments, coupling 332 may be configured to permit cover 320 to rotate from the third position back to the first position via the second position only.

As cover 320 may be rotated relative to base 310 through the multiple positions as described herein, a user may operate the mobile device to obtain a device compactness, display area, and orientation of data displayed as desired, while leaving input mechanism 324 fully accessible to the user in each of the multiple positions.

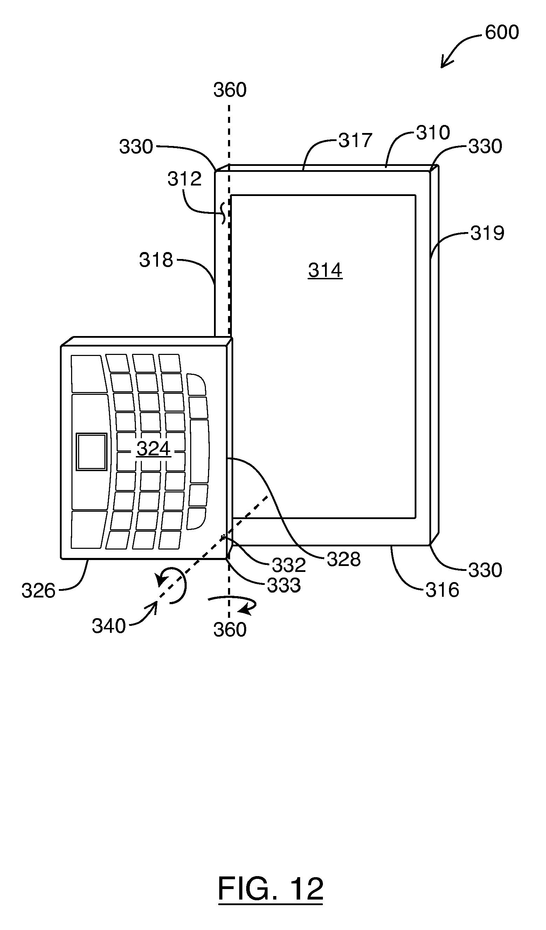

Referring now to FIG. 12, an illustration of a front perspective view of a mobile device (e.g. mobile device 100 of FIG. 1) with a rotatable portion in an alternative second position, in accordance with at least one embodiment is provided. With the rotatable portion in this alternative second position, the mobile device is referred to generally as 600 in FIG. 12.

In this embodiment, cover 320 (FIGS. 4 and 5) has been rotated counter-clockwise (e.g. 90 degrees counter-clockwise) relative to base 310 from the first position about coupling 332, to arrive at the alternative second position.
In this example, cover second side 328 of cover front surface 322 is now substantially overlapped and aligned with first long side 318 of base front surface 312.

In a variant embodiment, cover 320 may obtain the alternative second position illustrated in FIG. 12 through a clockwise rotation (e.g. 270 degrees clockwise).

In some embodiments, coupling 332 may be configured to prevent cover 320 from rotating further once the alternative second position is attained. Other elements may be provided on base 310 and/or cover 320 to prevent cover 320 from rotating further once the alternative second position is attained.

Other features described with reference to the embodiments illustrated in FIGS. 6 and 7 may be implemented with respect to embodiments in which the alternative second position is attained.

For example, in one embodiment, cover 320 is rotatable with respect to base 310 from the first position (e.g. mobile device 300 in FIGS. 4 and 5), to the alternative second position (e.g. mobile device 600 in FIG. 12), and subsequently, to the third position (e.g. mobile device 500 in FIGS. 9 to 11).

As a further example, in some embodiments, coupling 332 may be configured to permit cover 320 to rotate from the third position back to the first position directly. In some embodiments, coupling 332 may be configured to permit cover 320 to rotate from the third position back to the first position via the alternative second position only. In some embodiments, coupling 332 may be configured to permit cover 320 to rotate from the third position back to the first position via either the second position (e.g. FIGS. 6 and 7) or the alternative second position (e.g. FIG. 12).

As used herein, the wording "and/or" is intended to represent an inclusive-or. For example "X and/or Y" is intended to mean X or Y or both. As a further example, "X, Y, and/or Z" is intended to mean X or Y or Z or any combination thereof.

A number of embodiments have been described herein. However, it will be understood by persons skilled in the art that other variants and modifications may be made without departing from the scope of the embodiments as defined in the claims appended hereto.

## Claims

1. A mobile device (100, 300, 400, 500, 600) comprising:
a base (310), comprising a substantially four-sided base front surface (312) upon which a display (314) is provided; and
a cover (320) coupled to the base (310) at an area adjacent to one of four corners (330) of the base front surface (312) via a coupling (332), wherein the cover (320) comprises a cover front surface (322) upon which an input mechanism (324) is provided;
wherein the coupling (332) is configured such that the cover (320) is rotatable relative to the base (310) about a first axis of rotation (340), between at least a first position and a second position;
wherein the first axis of rotation (340) is a normal to both the base front surface (312) and the cover front surface (322);
wherein in the first position, the display (314) is covered in part by the cover (320), leaving a first area of the display (314) exposed;
wherein in the second position, a second area of the display (314) greater than the first area is left exposed by the cover (320); and
wherein when the cover (320) is in the first position, the cover front surface (322) and the base front surface (312) are substantially parallel and face in the same direction.

2. The mobile device of claim 1, wherein both the input mechanism (324) and at least a part of the display (314) remain exposed when the cover (320) is in the first position and also when the cover (320) is in the second position, and wherein the input mechanism (324) remains operable to receive user input when the cover (320) is in the first position and also when the cover (320) is in the second position.

3. The mobile device of claim 1 or claim 2, further comprising a position sensor (142) configured to detect when the cover (320) is in the first position and when the cover (320) is in the second position.

4. The mobile device of claim 3, wherein the display (314) is configured to output data in a portrait mode when the position sensor (142) detects that the cover (320) is in the first position, and to output data in a landscape mode when the position sensor (142) detects that the cover (320) is in the second position.

5. The mobile device of any one of the preceding claims, wherein the cover front surface (322) is substantially four-sided.

6. The mobile device of claim 5, wherein the cover front surface (322) is substantially square-shaped.

7. The mobile device of any one of the preceding claims:
wherein the base front surface (312) is bound by opposing first and second short sides (316, 317) of the base front surface (312) and opposing first and second long sides (318, 319) of the base front surface (312), the first short side (316) of the base front surface (312) and the first long side (318) of the base front surface (312) converging at the one of the four corners (330) of the base front surface (312);
wherein the cover front surface (322) is bound by at least first and second sides (326, 328), and the first and second sides (326, 328) converge at a corner (333) of the cover front surface (322) that is adjacent to the coupling (332);
wherein when the cover (320) is in the first position, the first side (326) of the cover front surface (322) is substantially overlapped and aligned with the first long side (318) of the base front surface (312), and the second side (328) of the cover front surface (322) is substantially overlapped and aligned with the first short side (316) of the base front surface (312); and
wherein when the cover (320) is in the second position, either the first side (326) of the cover front surface (322) is substantially overlapped and aligned with the first short side (316) of the base front surface (312), or the second side (328) of the cover front surface (322) is substantially overlapped and aligned with the first long side (318) of the base front surface (312).

8. The mobile device of any one of the preceding claims, wherein the coupling (332) is further configured such that the cover (320) is rotatable relative to the base (310) about a second axis of rotation (360), between the second position and a third position, wherein the second axis of rotation (360) is perpendicular to the first axis of rotation (340).

9. The mobile device of claim 8, wherein in the third position, the cover (320) is folded behind the base (310).

10. The mobile device of claim 9, wherein in the third position, the cover (320) is folded behind the base (310) such that the cover front surface (322) and the base front surface (312) are parallel and face in opposite directions.

11. The mobile device of any one of claims 8 to 10, wherein the input mechanism (324) remains operable to receive user input when the cover (320) is in the third position.

12. The mobile device of any one of claims 8 to 11, wherein a position sensor (142) is configured to detect when the cover (320) is in the third position, and wherein the display (314) is configured to operate in a mode associated with the third position.

13. The mobile device of any one of claims 8 to 12, when dependent on any one of claims 1 to 6:
wherein the base front surface (312) is bound by opposing first and second short sides (316, 317) of the base front surface (312) and opposing first and second long sides (318, 319) of the base front surface (312), the first short side (316) of the base front surface (312) and the first long side (318) of the base front surface (312) converging at the one of the four corners (330) of the base front surface (312);
wherein the cover front surface (322) is bound by at least first and second sides (326, 328) that converge at a corner (333) of the cover front surface (322) that is adjacent to the coupling (332);
wherein when the cover (320) is in the first position, the first side (326) of the cover front surface (322) is substantially overlapped and aligned with the first long side (318) of the base front surface (312), and the second side (328) of the cover front surface (322) is substantially overlapped and aligned with the first short side (316) of the base front surface (312);
wherein when the cover (320) is in the second position, either the first side (326) of the cover front surface (322) is substantially overlapped and aligned with the first short side (316) of the base front surface (312), or the second side (328) of the cover front surface (322) is substantially overlapped and aligned with the first long side (318) of the base front surface (312); and
wherein when the cover (320) is in the third position, the cover (320) is folded behind the base (310) such that the first long side (318) of the base front surface (312) is substantially overlapped and aligned with the second side (328) of the cover front surface (322), and the first short side (316) of the base front surface (312) is substantially overlapped and aligned with the first side (326) of the cover front surface (322).

14. The mobile device of claim 7 or claim 13, wherein the first side (326) of the cover front surface (322) and the first short side (316) of the base front surface (312) are substantially equal in length.

15. The mobile device of any one of the preceding claims, wherein the input mechanism (324) comprises one or more input elements selected from a group comprising: a track pad; a track ball; a touch screen; a keypad; a keyboard (116); one or more media playback controls; and one or more buttons.

## Amended claims

### Amended claims in accordance with Rule 137(2) EPC.

**1.** A mobile device (100, 300, 400, 500, 600) comprising:
a base (310), comprising a four-sided base front surface (312) upon which a display (314) is provided; and
a cover (320) coupled to the base (310) at an area adjacent to one of four corners (330) of the base front surface (312) via a coupling (332), wherein the cover (320) comprises a cover front surface (322) upon which an input mechanism (324) is provided;
wherein the cover (320) is rotatable, via the coupling (332), relative to the base (310) about a first axis of rotation (340), between at least a first position and a second position;
wherein the first axis of rotation (340) is a normal to both the base front surface (312) and the cover front surface (322);
wherein in the first position, the display (314) is covered in part by the cover (320), leaving a first area of the display (314) exposed;
wherein in the second position, a second area of the display (314) greater than the first area is left exposed by the cover (320);
wherein when the cover (320) is in the first position, the cover front surface (322) and the base front surface (312) are parallel and face in the same direction;
wherein the cover (320) is rotatable, via the coupling (332), relative to the base (310) about a second axis of rotation (360), between the second position and a third position;
wherein the second axis of rotation (360) is perpendicular to the first axis of rotation (340); and
wherein in the third position, the cover (320) is folded behind the base (310), and the cover front surface (322) and the base front surface (312) are parallel and face in opposite directions.

**2.** The mobile device of claim 1, wherein both the input mechanism (324) and at least a part of the display (314) remain exposed when the cover (320) is in the first position and also when the cover (320) is in the second position, and wherein the input mechanism (324) remains operable to receive user input when the cover (320) is in the first position and also when the cover (320) is in the second position.

**3.** The mobile device of claim 1 or claim 2, further comprising a position sensor (142) configured to detect when the cover (320) is in the first position and when the cover (320) is in the second position.

**4.** The mobile device of claim 3, wherein the display (314) is configured to output data in a portrait mode when the position sensor (142) detects that the cover (320) is in the first position, and to output data in a landscape mode when the position sensor (142) detects that the cover (320) is in the second position.

**5.** The mobile device of any one of the preceding claims, wherein the cover front surface (322) is four-sided.

**6.** The mobile device of claim 5, wherein the cover front surface (322) is square-shaped.

**7.** The mobile device of any one of the preceding claims:
wherein the base front surface (312) is bound by opposing first and second short sides (316, 317) of the base front surface (312) and opposing first and second long sides (318, 319) of the base front surface (312), the first short side (316) of the base front surface (312) and the first long side (318) of the base front surface (312) converging at the one of the four corners (330) of the base front surface (312);
wherein the cover front surface (322) is bound by at least first and second sides (326, 328), and the first and second sides (326, 328) converge at a corner (333) of the cover front surface (322) that is adjacent to the coupling (332);
wherein when the cover (320) is in the first position, the first side (326) of the cover front surface (322) is overlapped and aligned with the first long side (318) of the base front surface (312), and the second side (328) of the cover front surface (322) is overlapped and aligned with the first short side (316) of the base front surface (312); and
wherein when the cover (320) is in the second position, either the first side (326) of the cover front surface (322) is overlapped and aligned with the first short side (316) of the base front surface (312), or the second side (328) of the cover front surface (322) is overlapped and aligned with the first long side (318) of the base front surface (312).

**8.** The mobile device of any one of claims 1 to 7, wherein the input mechanism (324) remains operable to receive user input when the cover (320) is in the third position.

**9.** The mobile device of any one of claims 1 to 8, wherein a position sensor (142) is configured to detect when the cover (320) is in the third position, and wherein the display (314) is configured to operate in a mode associated with the third position.

**10.** The mobile device of any one of claims 1 to 9, when dependent on any one of claims 1 to 6:
wherein the base front surface (312) is bound by opposing first and second short sides (316, 317) of the base front surface (312) and opposing first and second long sides (318, 319) of the base front surface (312), the first short side (316) of the base front surface (312) and the first long side (318) of the base front surface (312) converging at the one of the four corners (330) of the base front surface (312);
wherein the cover front surface (322) is bound by at least first and second sides (326, 328) that converge at a corner (333) of the cover front surface (322) that is adjacent to the coupling (332);
wherein when the cover (320) is in the first position, the first side (326) of the cover front surface (322) is overlapped and aligned with the first long side (318) of the base front surface (312), and the second side (328) of the cover front surface (322) is overlapped and aligned with the first short side (316) of the base front surface (312);
wherein when the cover (320) is in the second position, either the first side (326) of the cover front surface (322) is overlapped and aligned with the first short side (316) of the base front surface (312), or the second side (328) of the cover front surface (322) is overlapped and aligned with the first long side (318) of the base front surface (312); and
wherein when the cover (320) is in the third position, the cover (320) is folded behind the base (310) and the first long side (318) of the base front surface (312) is overlapped and aligned with the second side (328) of the cover front surface (322), and the first short side (316) of the base front surface (312) is overlapped and aligned with the first side (326) of the cover front surface (322).

**11.** The mobile device of claim 7 or claim 10, wherein the first side (326) of the cover front surface (322) and the first short side (316) of the base front surface (312) are equal in length.

**12.** The mobile device of any one of the preceding claims, wherein the input mechanism (324) comprises one or more input elements selected from a group comprising: a track pad; a track ball; a touch screen; a keypad; a keyboard (116); one or more media playback controls; and one or more buttons.
